# EUROPEAN PATENT APPLICATION

(11) **EP 3 974 237 A1**
(43) Date of publication of application: **30.03.2022**
(21) Application number: 20841453.2
(22) Date of filing: 14.07.2020
(51) Int. Cl.: B60L 15/20

(54) **MOTOR CONTROL METHOD, APPARATUS AND DEVICE, AND COMPUTER READABLE STORAGE MEDIUM**

(30) Priority: 16.07.2019 CN 201910641279
(71) Applicant: Great Wall Motor Company Limited, Baoding, Hebei 071000 (CN)
(72) Inventor: WANG, Yinlei, Baoding City, Hebei 071000 (CN); LING, Wenchao, Baoding City, Hebei 071000 (CN); CHEN, Shujiang, Baoding City, Hebei 071000 (CN); SUN, Jiaxin, Baoding City, Hebei 071000 (CN); LIU, Xiu, Baoding City, Hebei 071000 (CN); HOU, Wentao, Baoding City, Hebei 071000 (CN)
(74) Representative: dompatent von Kreisler Selting Werner - Partnerschaft von Patent- und Rechtsanwälten mbB
(86) International application number: PCT/CN2020/101915
(87) International publication number: WO 2021/008527

(57) **Abstract**

Embodiments of the present application provide a motor control method, a motor control apparatus, a motor control device, and a computer-readable storage medium. The method comprises: acquiring a motor speed and a motor torque value of a vehicle when it is monitored that the vehicle enters a hill-start assist mode; determining a preload torque value corresponding to the motor speed according to the motor speed; determining a PI parameter value corresponding to the motor torque value according to the motor torque value, and calculating a torque regulation amount according to the PI parameter value corresponding to the motor torque value, the motor speed, and a PI algorithm; and summing the preload torque value and the torque regulation amount, and controlling a motor of the vehicle by using a summed result as a torque control amount to keep the vehicle in a stationary state. According to the embodiments of the present application, two factors of the motor speed and the motor torque value can be considered in a motor control process, so that the torque control amount can better meet the requirements of the vehicle, thereby improving the stability of the vehicle.

## Description

The application claims the priority to Chinese Patent Application No. 201910641279.4 filed with Chinese Patent Office on July 16, 2019, and entitled "MOTOR CONTROL METHOD, APPARATUS AND DEVICE, AND COMPUTER READABLE STORAGE MEDIUM", which is incorporated herein in its entirety by reference.

### TECHNICAL FIELD

The present application relates to the field of vehicle control technologies and, in particular to a motor control method, an apparatus and a device, and a computer-readable storage medium.

### BACKGROUND

During a hill start of a vehicle, the direction of the vehicle may be inconsistent with a driving gear from releasing a brake pedal to stepping on an accelerator pedal, that is, the vehicle appears to be coasting, which is likely to cause a safety accident.

In the prior art, when it is detected that the vehicle is coasting, a target torque value is usually increased to a motor controller through a vehicle controller, and a target torque gradient is increased at the same time, to quickly stop the vehicle from coasting.

In the prior art, the vehicle can stop coasting quickly by increasing the target torque value and the target torque gradient. However, because the target torque value and the target torque gradient are always large during regulation, the motor speed increases excessively fast, so that the vehicle will have forward rush, and the vehicle stability is poor.

### SUMMARY

The present application provides a motor control method, an apparatus, a device, and a computer-readable storage medium to solve the existing problem of poor vehicle stability in the process of preventing coasting.

According to a first aspect, an embodiment of the present application provides a method for motor control, including:
acquiring a motor speed and a motor torque of a vehicle when it is monitored that the vehicle enters a hill-start assist mode;
determining a preload torque value corresponding to the motor speed according to the motor speed;
determining a proportional-integral (PI) parameter value corresponding to the motor torque value according to the motor torque value, and calculating a torque regulation amount according to the PI parameter value corresponding to the motor torque value, the motor speed, and a PI algorithm; and
summing the preload torque value and the torque regulation amount, and controlling a motor of the vehicle by using a summed result as a torque control amount to keep the vehicle in a stationary state.

In a possible implementation, before it is monitored that the vehicle enters the hill-start assist mode, the method further comprises:
acquiring operating status information of the vehicle;
determining whether the vehicle enters the stationary state according to the operating status information of the vehicle and a preset condition for entering the stationary state;
acquiring motor status information of the vehicle if the vehicle enters the stationary state; and
determining that the vehicle enters the hill-start assist mode when it is determined that the motor status information of the vehicle meets a preset condition for entering the hill-start assist mode.

In a possible implementation, after the step of determining that the vehicle enters the hill-start assist mode, the method further comprises:
monitoring whether an exit event of the hill-start assist mode is triggered; and
exiting the hill-start assist mode if the exit event of the hill-start assist mode is triggered;
wherein after the vehicle enters the stationary state, the method further comprises:
monitoring whether an exit event of the stationary state is triggered; and
exiting the stationary state if the exit event of the stationary state is triggered.

In a possible implementation, the step of determining a preload torque value corresponding to the motor speed according to the motor speed comprises:
searching the preload torque value corresponding to the motor speed in a preset data sheet when it is determined that the acquired motor speed is a negative value and an absolute value of the motor speed is increasing;
determining that the absolute value of the motor speed reaches a maximum value when it is determined that the acquired motor speed is a negative value and the absolute value of the motor speed is less than an absolute value of a motor speed acquired at a previous moment; and
regarding a preload torque value corresponding to the maximum value as the preload torque value of the motor speed after the absolute value of the motor speed reaches the maximum value.

In a possible implementation, the step of determining a proportional-integral (PI) parameter value corresponding to the motor torque value according to the motor torque value comprises:
determining a torque range to which the motor torque value belongs according to the motor torque value and a preset torque range, wherein each torque range corresponds to a PI parameter value; and
searching a PI parameter value corresponding to the torque range to which the motor torque value belongs as the PI parameter value corresponding to the motor torque value.

In a possible implementation, the method further comprises:
monitoring whether the motor speed of the vehicle rises from a negative value to a zero value when the vehicle is in the hill-start assist mode;
if it is monitored that the motor speed of the vehicle rises from the negative value to the zero value, regarding the minimum value between the torque regulation amount and a first preset torque threshold as the torque control amount when the motor speed rises to the zero value; and
performing the following step until the reduction difference from the acquired motor torque value relative to the motor torque value when the motor speed is the zero value is greater than a preset reduction threshold: after the motor speed rises beyond the zero value, regarding the maximum value between the torque regulation amount and a second preset torque threshold as the torque control amount.

In a possible implementation, the method further comprises:
monitoring whether a motor temperature exceeds a preset temperature threshold after the vehicle enters the hill-start assist mode, if the motor temperature exceeds the preset temperature threshold, stopping up-regulation for the motor torque and giving an alarm prompt.

According to a second aspect, an embodiment of the present application provides an apparatus for motor control, including:
an acquisition module, configured to acquire a motor speed and a motor torque of a vehicle when it is monitored that the vehicle enters a hill-start assist mode;
a first processing module, configured to determine a preload torque value corresponding to the motor speed according to the motor speed;
a second processing module, configured to determine a proportional-integral (PI) parameter value corresponding to the motor torque value according to the motor torque value, and calculate a torque regulation amount according to the PI parameter value corresponding to the motor torque value, the motor speed and a PI algorithm; and
a control module, configured to sum the preload torque value and the torque regulation amount, and control a motor of the vehicle by using a summed result as a torque control amount to keep the vehicle in a stationary state.

In a possible implementation, the apparatus further comprises a monitoring module, the monitoring module is configured to:
acquire operating status information of the vehicle;
determine whether the vehicle enters the stationary state according to the operating status information of the vehicle and a preset condition for entering the stationary state;
acquire motor status information of the vehicle if the vehicle enters the stationary state; and
determine that the vehicle enters the hill-start assist mode when it is determined that the motor status information of the vehicle meets a preset condition for entering the hill-start assist mode.

In a possible implementation, the monitoring module is further configured to:
monitor whether an exit event of the hill-start assist mode is triggered after the determining that the vehicle enters the hill-start assist mode;
exit the hill-start assist mode if the exit event of the hill-start assist mode is triggered;
monitor whether an exit event of the stationary state is triggered after the vehicle enters the stationary state; and
exit the stationary state if the exit event of the stationary state is triggered.

In a possible implementation, the first processing module is configured to:
search the preload torque value corresponding to the motor speed in a preset data sheet when it is determined that the acquired motor speed is a negative value and an absolute value of the motor speed is increasing;
determine that the absolute value of the motor speed reaches a maximum value when it is determined that the acquired motor speed is a negative value and the absolute value of the motor speed is less than an absolute value of a motor speed acquired at a previous moment; and
regard a preload torque value corresponding to the maximum value as the preload torque value of the motor speed after the absolute value of the motor speed reaches the maximum value.

In a possible implementation, the second processing module is configured to:
determine a torque range to which the motor torque value belongs according to the motor torque value and a preset torque range, where each torque range corresponds to a PI parameter value; and
search a PI parameter value corresponding to the torque range to which the motor torque value belongs as the PI parameter value corresponding to the motor torque value.

In a possible implementation, the apparatus further comprises a third processing module, the third processing module is configured to:
monitor whether the motor speed of the vehicle rises from a negative value to a zero value when the vehicle is in the hill-start assist mode;
if it is monitored that the motor speed of the vehicle rises from the negative value to the zero value, regarding the minimum value between the torque regulation amount and a first preset torque threshold as the torque control amount when the motor speed rises to the zero value; and
performing the following step until the reduction difference from the acquired motor torque relative to the torque when the motor speed is the zero value is greater than a preset reduction threshold: after the motor speed rises beyond the zero value, regarding the maximum value between the torque regulation amount and a second preset torque threshold as the torque control amount.

In a possible implementation, the apparatus further comprises a cooling module, and the cooling module is configured to:
switch a state of a water pump to an operating state after the vehicle enters the hill-start assist mode to cool the motor.

In a possible implementation, the apparatus further comprises an alarm module, and the alarm module is configured to:
monitor whether a motor temperature exceeds a preset temperature threshold after the vehicle enters the hill-start assist mode, if the motor temperature exceeds the preset temperature threshold, stop up-regulation for the motor torque and give an alarm prompt.

According to a third aspect, an embodiment of the present application provides a device for motor control, including at least one processor and a memory;
the memory stores a computer-executable instruction; and
the at least one processor executes the computer-executable instruction stored in the memory, so that the at least one processor executes the method for motor control according to the first aspect and various possible implementations of the first aspect.

According to a fourth aspect, an embodiment of the present application provides a computer-readable storage medium having a computer-executable instruction stored therein, the computer-executable instruction, when executed by a processor, implements the method for motor control according to the first aspect and various possible implementations of the first aspect.

According to the motor control method, the apparatus, the device and the computer-readable storage medium provided by the embodiments of the present application, the method includes: acquiring a motor speed and a motor torque of a vehicle when it is monitored that the vehicle enters a hill-start assist mode; determining a preload torque value corresponding to the motor speed according to the motor speed; determining a proportional-integral (PI) parameter value corresponding to the motor torque value according to the motor torque value, and calculating a torque regulation amount according to the PI parameter value corresponding to the motor torque value, the motor speed and a PI algorithm; and summing the preload torque value and the torque regulation amount, and controlling a motor of the vehicle by using a summed result as a torque control amount to keep the vehicle in a stationary state. A torque control amount is obtained by adding a preload torque value determined according to a motor speed and a torque regulation amount determined according to a motor torque value, and two factors of the motor speed and the motor torque value can be considered in a motor control process, so that the torque control amount can better meet the requirements of the vehicle, thereby improving the stability of the vehicle.

The above description is only an overview of the technical solutions of the present application. To make the technical means of the present application clearer and can be implemented according to the contents of the specification, and to make the above and other purposes, features and advantages of the present application more obvious and easier to understand, specific implementations of the present application will be illustrated by way of examples.

### BRIEF DESCRIPTION OF THE DRAWINGS

In order to explain the technical solutions in the embodiments of the present application or in the prior art more clearly, the drawings used in the description of the embodiments or the prior art will be briefly introduced below. Obviously, the drawings in the following description are some embodiments of the present application. For those of ordinary skill in the art, other drawings can be obtained according to these drawings without creative efforts.
FIG. 1 schematically illustrates a schematic flow chart of a motor control method according to an embodiment of the present application;
FIG. 2 schematically illustrates a schematic flow chart of a motor control method according to another embodiment of the present application;
FIG. 3 schematically illustrates a schematic flow chart of a motor control method according to another embodiment of the present application;
FIG. 4 schematically illustrates a schematic flow chart of a motor control method according to yet another embodiment of the present application;
FIG. 5 schematically illustrates a schematic structural diagram of a motor control system according to an embodiment of the present application;
FIG. 6 schematically illustrates a schematic structural diagram of a motor control apparatus according to an embodiment of the present application;
FIG. 7 schematically illustrates a schematic structural diagram of a motor control apparatus according to another embodiment of the present application;
FIG. 8 schematically illustrates a schematic diagram of a hardware structure of a motor control device according to an embodiment of the present application;
FIG. 9 schematically illustrates a block diagram of a motor control device for performing the method according to the present application; and
FIG. 10 schematically illustrates a storage unit for holding or carrying a program code for implementing the method according to the present application.

### DETAILED DESCRIPTION

To make the objectives, technical solutions, and advantages of the present application clearer, the following clearly and completely describes the technical solutions in the embodiments of the present application with reference to the accompanying drawings in the embodiments of the present application. Obviously, the described embodiments are some but not all of embodiments of the present application. According to the embodiments of the present application, all other embodiments obtained by those of ordinary skill in the art without creative work should fall within the protection scope of the present application.

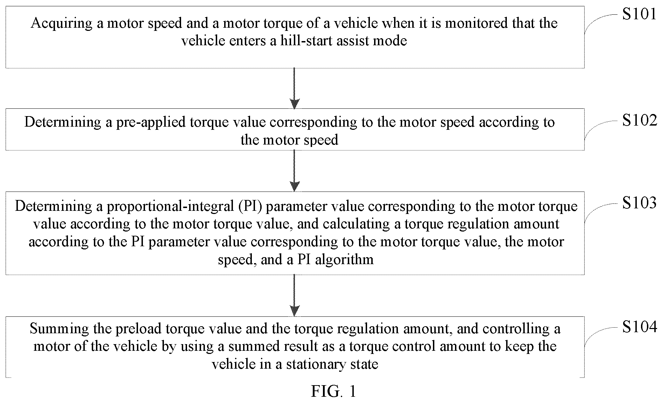

FIG. 1 is a schematic flow chart of a motor control method according to an embodiment of the present application. An implementing subject of the motor control method may be a vehicle controller, or a motor controller of the vehicle, or a control device composed of the vehicle controller and the motor controller of the vehicle, or another device such as a vehicle-mounted terminal and a server, which is not limited herein.

As shown in FIG. 1, the method includes:
S101: acquiring a motor speed and a motor torque of a vehicle when it is monitored that the vehicle enters a hill-start assist mode.

In the embodiment, the hill-start assist mode is a preset motor control mode to prevent the vehicle from coasting. It can be determined whether the vehicle enters the hill-start assist mode according to a preset condition for entering the hill-start assist mode and status information of the vehicle. Motor speeds and motor torques of the vehicle can be acquired at regular intervals during a period when the vehicle is monitored from entering the hill-start assist mode to exiting the hill-start assist mode. Then, a corresponding motor control amount is obtained according to data acquired at each time, and the motor is controlled to regulate an operating state of the motor.

S102: determining a preload torque value corresponding to the motor speed according to the motor speed.

In the embodiment, the preload torque value is a preset torque value. A motor speed corresponds to a preload torque value. It should be noted that the motor speeds and the preload torque values may not be in a one-to-one correspondence, and a plurality of motor speeds may correspond to the same preload torque value. A preload torque value corresponding to a motor speed can be determined according to the acquired motor speed and a preset data sheet.

S103: determining a proportional-integral (PI) parameter value corresponding to the motor torque value according to the motor torque value, and calculating a torque regulation amount according to the PI parameter value corresponding to the motor torque value, the motor speed, and a PI algorithm.

In the embodiment, the PI parameter value is a preset parameter for calculating a motor torque by the PI algorithm. A motor torque value corresponds to a PI parameter value. It should be noted that motor torque values and PI parameter values may not be in a one-to-one correspondence, and a plurality of motor torque values may correspond to the same PI parameter value. A PI parameter value corresponding to the acquired motor torque value can be determined, and then a torque regulation amount is calculated according to the PI parameter value corresponding to the motor torque value, the acquired motor speed and the PI algorithm. For example, the acquired motor speed and a target speed can be calculated by the PI algorithm with a PI parameter value corresponding to the motor torque value to obtain a torque regulation amount. The target speed may be a zero value or within a range around the zero value to keep the vehicle in a stationary state, which is not limited herein.

S104: summing the preload torque value and the torque regulation amount, and controlling a motor of the vehicle by using a summed result as a torque control amount to keep the vehicle in a stationary state.

In the embodiment, the sum of the preload torque value and the torque regulation amount can be calculated and used as a torque control amount to control the motor of the vehicle. After the vehicle enters the hill-start assist mode, the corresponding torque control amount is obtained by constantly acquired motor speeds and motor torque values to regulate the motor, so as to keep the vehicle in a stationary state and stop coasting.

According to the embodiment of the present application, the method includes: acquiring a motor speed and a motor torque of a vehicle when the vehicle is monitored to enter a hill-start assist mode; determining a preload torque value corresponding to the motor speed according to the motor speed; determining a proportional-integral (PI) parameter value corresponding to the motor torque value according to the motor torque value, and calculating a torque regulation amount according to the PI parameter value corresponding to the motor torque value, the motor speed and a PI algorithm; and summing the preload torque value and the torque regulation amount, and controlling a motor of the vehicle by using a summed result as a torque control amount to keep the vehicle in a stationary state. A torque control amount is obtained by adding a preload torque value determined according to a motor speed and a torque regulation amount determined according to a motor torque value, and two factors of the motor speed and the motor torque value can be considered in a motor control process, so that the torque control amount can better meet the requirements of the vehicle, thereby improving the stability of the vehicle.

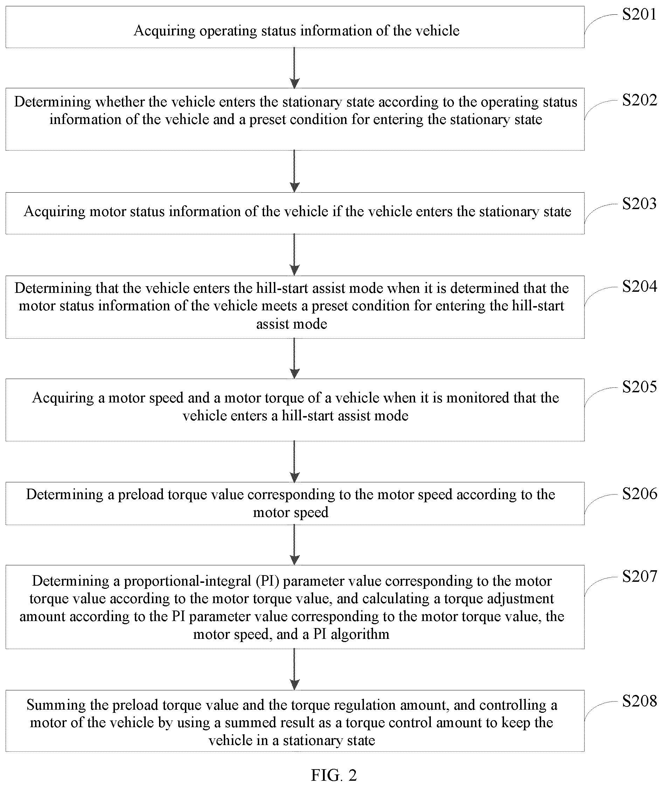

FIG. 2 is a schematic flow chart of a motor control method according to another embodiment of the present application. The embodiment provides a detailed description of a specific implementation process for monitoring whether the vehicle enters a hill-start assist mode. As shown in FIG. 2, the method includes:
S201: acquiring operating status information of the vehicle.

In the embodiment, the operating status information of the vehicle may include, but is not limited to, at least one of the followings: system fault, electric power of drive motor, gear state, gear effective time, motor speed, opening of accelerator pedal, whether the driving shift status gear is active.

S202: determining whether the vehicle enters the stationary state according to the operating status information of the vehicle and a preset condition for entering the stationary state.

In the embodiment, if the operating status information of the vehicle meets the preset condition for entering the stationary state, it is determined that the vehicle enters the stationary state; and if the operating status information of the vehicle does not meet the preset condition for entering the stationary state, it is determined that the vehicle does not enter the stationary state.

Optionally, the preset condition for entering the stationary state may include, but is not limited to, one or more of the followings:
1. the vehicle is free from system fault above a preset level threshold (e.g., Level 4, etc.);
2. the electric power of a drive motor is greater than or equal to a preset power threshold (e.g., 3 KW, etc.);
3. the gear effective time is greater than a preset effective time (e.g., 0.6 s, etc.);
4. when a logic gear is at a gear D and a brake is stepped on, the motor speed is less than a set entry speed (e.g., 10 rpm) and lasts for a preset duration (e.g., 50 ms, etc.); or when the logic gear is at a gear R and the brake is stepped on, the motor speed is less than a set entry speed (e.g., 10 rpm) and lasts for the preset duration (e.g., 50 ms, etc.); wherein, the gear D (drive) is a forward gear of the vehicle, and the gear R (reverse) is a reverse gear of the vehicle;
5. the opening of the accelerator pedal is less than a preset opening threshold (e.g., 5%, etc.), and a handbrake or an electrical park brake (EPB) system is not started.
6. the vehicle status is in: a ready status; and
7. the driving shift status gear is inactive.

If the operating status information of the vehicle meets all the above conditions, it is determined that the vehicle enters the stationary state; or if the operating status information of the vehicle meets one or more of the specified conditions, it is determined that the vehicle enters the stationary state, which is not limited herein.

In the ready status, when the vehicle speed is less than a preset speed threshold (e.g., 10 km/h, etc.) and the motor speed is greater than a preset speed threshold (e.g., 50 r/min), logic gears of the vehicle change as follows: D→R, N→R, R→D, N→D; when the motor speed direction is inconsistent with the gear, the driving shift status gear is marked as active; and when the motor speed direction is consistent with the gear, the driving shift status gear is marked as inactive. The gear N (neutral) is a neutral gear of the vehicle.

S203: acquiring motor status information of the vehicle if the vehicle enters the stationary state.

In the embodiment, if the vehicle enters the stationary state, motor status information of the vehicle is obtained, the motor status information includes motor rotation direction, motor speed and motor speed holding time, etc. which is not limited herein.

S204: determining that the vehicle enters the hill-start assist mode when it is determined that the motor status information of the vehicle meets a preset condition for entering the hill-start assist mode.

In the embodiment, it is determined that the vehicle enters the hill-start assist mode when the motor status information of the vehicle meets the preset condition for entering the hill-start assist mode.

Optionally, the preset condition for entering the hill-start assist mode may include, but is not limited to, one or more of the followings:
1. the vehicle enters the stationary state;
2. the motor rotates in a reverse direction;
3. the motor speed is greater than a preset speed threshold (e.g., 38 rpm, etc.) and the duration of the motor speed exceeds a preset duration (e.g., 24 ms, etc.);

It is determined that the vehicle enters the hill-start assist mode if the motor status information of the vehicle meets all the above conditions. The motor speed can be detected at a regular interval (e.g., 400 us, etc.).

S205: acquiring a motor speed and a motor torque of a vehicle when it is monitored that the vehicle enters the hill-start assist mode.

In the present embodiment, S205 is similar to S101 in the embodiment shown in FIG. 1, and thus will not be described herein again.

S206: determining a preload torque value corresponding to the motor speed according to the motor speed.

In the present embodiment, S206 is similar to S102 in the embodiment shown in FIG. 1, and thus will not be described herein again.

S207: determining a PI parameter value corresponding to the motor torque value according to the motor torque value, and calculating a torque regulation amount according to the PI parameter value corresponding to the motor torque value, the motor speed and a PI algorithm.

In the present embodiment, S207 is similar to S103 in the embodiment shown in FIG. 1, and thus will not be described herein again.

S208: summing the preload torque value and the torque regulation amount, and controlling a motor of the vehicle by using a summed result as a torque control amount to keep the vehicle in a stationary state.

In the present embodiment, S208 is similar to S104 in the embodiment shown in FIG. 1, and thus will not be described herein again.

In the embodiment, it is determined whether the vehicle enters the stationary state according to the preset condition for entering the stationary state, and after the vehicle enters the stationary state, it is determined whether the vehicle enters the hill-start assist mode according to the preset condition for entering the hill-start assist mode, in this way, the vehicle can be accurately monitored to enter the hill-start assist mode, so that the motor of the vehicle is controlled in time by the motor control method provided in the embodiment to stop coasting.

Optionally, after the step of determining that the vehicle enters the hill-start assist mode, the method further includes:
monitoring whether an exit event of the hill-start assist mode is triggered; and
exiting the hill-start assist mode if the exit event of the hill-start assist mode is triggered.

In the embodiment, the exit event of the hill-start assist mode can be preset, and after the vehicle enters the hill-start assist mode, if the exit event for the hill-start assist mode is triggered, the vehicle will exit the hill-start assist mode. The exit event of the hill-start assist mode may include, but is not limited to, at least one of the followings:
1. the vehicle exits the stationary state;
2. a single hill-holding time is greater than a preset duration threshold (e.g., 4 s, etc.);
3. the motor speed is greater than a preset speed threshold (e.g., 200 rpm, etc.);
4. the vehicle itself has a system fault above a preset level (e.g., Level 3, etc.); and
5. a preset number (e.g., 4 times) of hill holding has been completed.

If any of the above events or one or more specified events are triggered, the vehicle exits the hill-start assist mode.

Optionally, after the vehicle enters the stationary state, the method may further include:
monitoring whether an exit event of the stationary state is triggered; and
exiting the stationary state if the exit event of the stationary state is triggered.

In the embodiment, the exit event of the stationary state can be preset, and after the vehicle enters the stationary state, if the exit event of the stationary state is triggered, the vehicle will exit the stationary state. The exit event of the stationary state may include, but is not limited to, at least one of the followings:
1. the vehicle has a system fault of a preset level (e.g., Level 4, etc.) and above;
2. a current logic gear is shifted to another gear (e.g., from D to R or from D to N);
3. the electric power of a drive motor is less than a preset power threshold (e.g., 3 KW, etc.);
4. a required torque for creeping is greater than a real torque of the motor after the hill-start assist mode is completed, with a difference greater than a preset threshold (e.g., 5 Nm) and a duration longer than a preset duration (e.g., 0.6 s);
5. a required torque for ACCPedal is greater than a real torque after the hill-start assist mode is completed, with a difference greater than a preset threshold (e.g., 5 Nm) and a duration longer than a preset duration (e.g., 0.05 s);
6. in the hill-start assist mode, an absolute value of a motor speed at gear D/R is greater than or equal to a preset threshold (e.g., 200 rpm);
7. the vehicle status is in: a non-ready status;
8. the handbrake is pulled up; and
9. an antilock brake system (ABS) is activated.

If any of the above events or one or more specified events are triggered, the vehicle exits the stationary state.

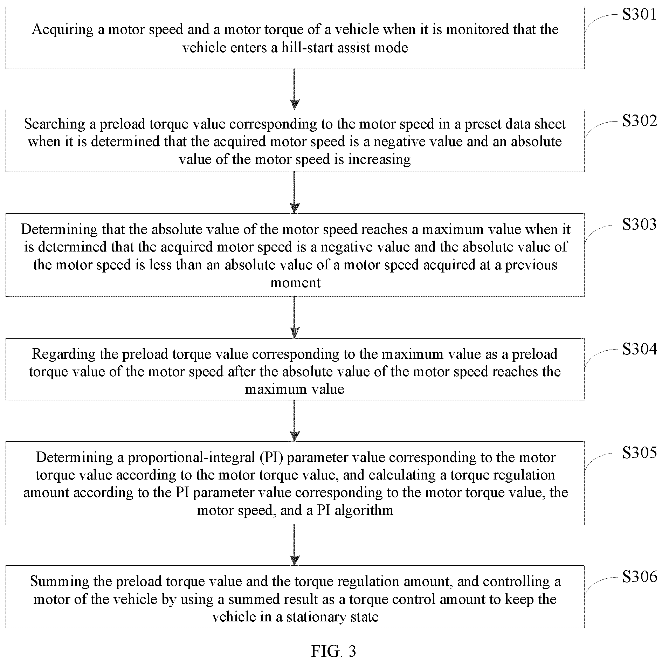

FIG. 3 is a schematic flow chart of a motor control method according to another embodiment of the present application. The embodiment provides a detailed description of a specific implementation process for determining a preload torque value corresponding to the motor speed. As shown in FIG. 3, the method includes:
S301: acquiring a motor speed and a motor torque of a vehicle when it is monitored that the vehicle enters a hill-start assist mode.

In the present embodiment, S301 is similar to S101 in the embodiment shown in FIG. 1, and thus will not be described herein again.

S302: searching the preload torque value corresponding to the motor speed in a preset data sheet when it is determined that the acquired motor speed is a negative value and an absolute value of the motor speed is increasing.

S303: determining that the absolute value of the motor speed reaches a maximum value when it is determined that the acquired motor speed is a negative value and the absolute value of the motor speed is less than an absolute value of a motor speed acquired at a previous moment.

S304: regarding a preload torque value corresponding to the maximum value as the preload torque value of the motor speed after the absolute value of the motor speed reaches the maximum value.

In the embodiment, after the vehicle enters the hill-start assist mode, the motor speed is a negative value at first, i.e., the motor speed direction is reversed. After that, the absolute value of the motor speed increases gradually, but remains a negative value. When the absolute value increases to the maximum value, the motor speed approaches to a zero value due to motor torque regulation, and then fluctuates up and down around the zero value. The fluctuation amplitude decreases gradually, and eventually approaches to the zero value. In this case, the vehicle stops moving and remains stationary. Therefore, after the vehicle enters the hill-start assist mode, the change of the motor speed may be divided into two stages: a first stage and a second stage. A division point between the first stage and the second stage is a point where the motor speed is a negative value and the absolute value reaches the maximum value.

In the first stage, the acquired motor speed is a negative value and the absolute value of the motor speed is increasing. In this stage, a preload torque value corresponding to the acquired motor speed can be searched in the preset data sheet.

It is determined that the absolute value of the motor speed reaches the maximum value when the acquired motor speed is a negative value and the absolute value of the motor speed is less than an absolute value of a motor speed acquired at a previous moment. The second stage starts after the first stage is completed.

In the second stage, i.e., an regulation stage after the absolute value of the motor speed reaches the maximum value, instead of searching the preload torque value corresponding to the acquired motor speed from the preset data sheet, the corresponding preload torque value when the absolute value of the motor speed is the maximum value is used as the preload torque value of the motor speed, the preload torque value is always kept unchanged in the second stage, and the torque value is used to control and regulate the motor.

S305: determining a proportional-integral (PI) parameter value corresponding to the motor torque value according to the motor torque value, and calculating a torque regulation amount according to the PI parameter value corresponding to the motor torque value, the motor speed, and a PI algorithm.

In the present embodiment, S305 is similar to S103 in the embodiment shown in FIG. 1, and thus will not be described herein again.

S306: summing the preload torque value and the torque regulation amount, and controlling a motor of the vehicle by using a summed result as a torque control amount to keep the vehicle in a stationary state.

In the present embodiment, S306 is similar to S104 in the embodiment shown in FIG. 1, and thus will not be described herein again.

In the embodiment, the corresponding preload torque value when the motor speed reaches the maximum value of the absolute value is used as a preload torque value of a motor speed acquired later, so that a selected preload torque value can meet requirements for motor torque regulation, thereby avoiding the problem of weak regulation effect caused by excessively small preload torque values.

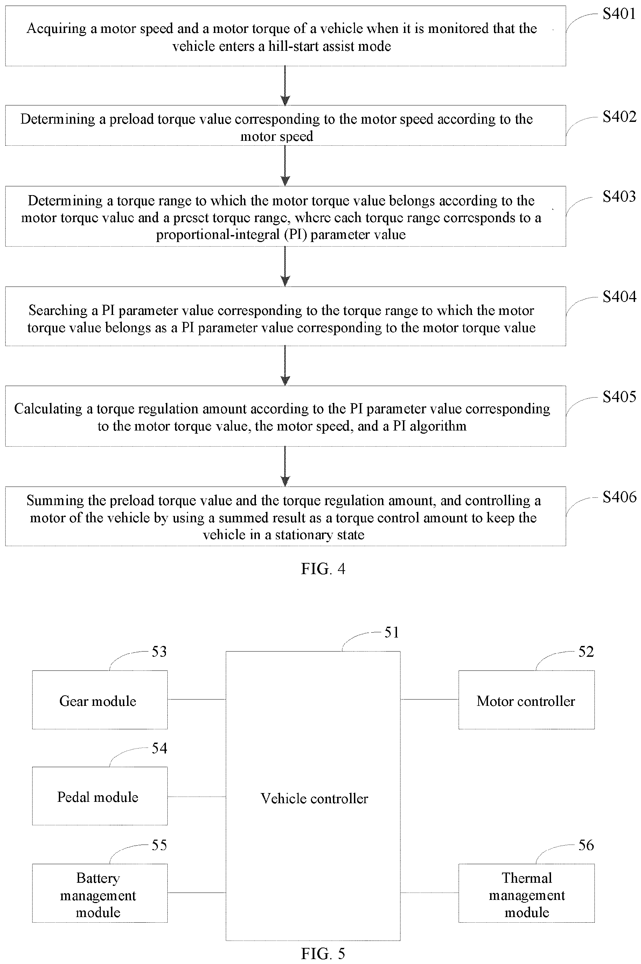

FIG. 4 is a schematic flow chart of a motor control method according to another embodiment of the present application. The embodiment provides a detailed description of a specific implementation process for determining a PI parameter value corresponding to the motor torque value. As shown in FIG. 4, the method includes:
S401: acquiring a motor speed and a motor torque of a vehicle when it is monitored that the vehicle enters a hill-start assist mode.

In the present embodiment, S401 is similar to S101 in the embodiment shown in FIG. 1, and thus will not be described herein again.

S402: determining a preload torque value corresponding to the motor speed according to the motor speed.

In the present embodiment, S402 is similar to S102 in the embodiment shown in FIG. 1, and thus will not be described herein again.

S403: determining a torque range to which the motor torque value belongs according to the motor torque value and a preset torque range, where each torque range corresponds to a proportional-integral (PI) parameter value.

S404: searching a PI parameter value corresponding to the torque range to which the motor torque value belongs as the PI parameter value corresponding to the motor torque value.

In the embodiment, a plurality of torque ranges can be preset, and each torque range corresponds to a PI parameter value. After a motor torque value is acquired, a torque range to which the motor torque value belongs can be determined, and then the PI parameter value corresponding to the torque range is searched in the preset data sheet as the PI parameter value corresponding to the acquired motor torque value. For example, three torque ranges, i.e., ≤30 N.m, 30 N.m to 90 N.m, and ≥90 N.m, can be set, and the three torque ranges correspond to three sets of PI parameter values respectively.

S405: calculating a torque regulation amount according to the PI parameter value corresponding to the motor torque value, the motor speed, and a PI algorithm.

S406: summing the preload torque value and the torque regulation amount, and controlling a motor of the vehicle by using a summed result as a torque control amount to keep the vehicle in a stationary state.

In the present embodiment, S406 is similar to S103 in the embodiment shown in FIG. 1, and thus will not be described herein again.

According to the embodiment, the PI parameter value corresponding to the acquired motor torque value can be determined quickly and accurately through the preset torque range.

Optionally, the method may further include:
monitoring whether the motor speed of the vehicle rises from a negative value to a zero value when the vehicle is in the hill-start assist mode;
if it is monitored that the motor speed of the vehicle rises from the negative value to the zero value, regarding the minimum value between the torque regulation amount and a first preset torque threshold as the torque control amount when the motor speed rises to the zero value; and
performing the following step until the reduction difference from the acquired motor torque relative to the torque when the motor speed is the zero value is greater than a preset reduction threshold: after the motor speed rises beyond the zero value, regarding the maximum value between the torque regulation amount and a second preset torque threshold as the torque control amount.

In the embodiment, it can be monitored whether the motor speed of the vehicle rises from a negative value to a zero value when the vehicle is in the hill-start assist mode. If the motor speed of the vehicle is monitored to rise from the negative value to the zero value, a calculated torque regulation amount can then be compared with the first preset torque threshold, and the minimum value therebetween is selected as the torque control amount for motor control. If a large torque control amount is still used when the motor speed is beyond the zero value, the vehicle will have obvious forward rush due to excessive overshoot of the reverse speed. With a small first preset torque threshold, the vehicle can be kept smooth when the motor speed is beyond the zero value, so as to avoid obvious forward rush and improve the stability of the vehicle.

After the motor speed rises beyond the zero value, a calculated torque regulation amount can be compared with the second preset torque threshold, and the maximum value therebetween is selected as the torque control amount. As the motor speed rises beyond the zero value, the vehicle changes from backward sliding to forward rush. In this case, the motor torque needs to be reduced as soon as possible to prevent the vehicle from excessive forward rush. Therefore, the maximum value between the torque regulation amount and the second preset torque threshold can be selected as the torque control amount, and the motor torque value is reduced in time with a large torque gradient until the reduction difference is equal to the preset reduction threshold.

In the embodiment, the stability of the vehicle when the speed is beyond the zero value is ensured by limiting the torque control amount using the first preset torque threshold when the motor speed is beyond the zero value; and the motor torque is reduced with a large torque gradient by limiting the torque control amount using the second preset torque threshold after the motor speed is beyond the zero value, which can reduce the degree of forward rush of the vehicle, thereby improving the stability of the vehicle.

Optionally, the method may further include:
switching a state of a water pump to an operating state after the vehicle enters the hill-start assist mode to cool the motor.

In the embodiment, after the vehicle enters the hill-start assist mode, the water pump can be controlled to turn on to meet cooling requirements of the motor and prevent the motor from overtemperature.

Optionally, the method may further include:
monitoring whether a motor temperature exceeds a preset temperature threshold after the vehicle enters the hill-start assist mode, if the motor temperature exceeds the preset temperature threshold, stopping up-regulation for the motor torque and giving an alarm prompt.

In the embodiment, the preset temperature threshold can be set according to actual needs, for example, the preset temperature threshold may be 85° or 87°, etc. which is not limited herein. After the vehicle enters the hill-start assist mode, if the motor temperature is monitored to exceed the preset temperature threshold, it indicates that the motor torque regulation has reached the limit, a fault occurs easily to the motor if the power is kept increasing, which indicates that the motor control method mentioned above has failed to stop coasting. In this case, up-regulation for the motor torque can be stopped, and an alarm prompt is given to prompt the driver to brake the vehicle through a handbrake or another brake mode to stop coasting.

As an implementation example of the present application, the motor control method can be implemented by a vehicle controller and a motor controller of the vehicle. FIG. 5 is a schematic structural diagram of a motor control system according to an embodiment of the present application. As shown in FIG. 5, the motor control system may include a vehicle controller 51, a motor controller 52, a gear module 53, a pedal module 54, a battery management module 55 and a thermal management module 56. The vehicle controller 51 is configured to monitor whether a vehicle enters a stationary state according to operating status information of the vehicle, and send an instruction for entering the stationary state to the motor controller 52 after monitoring that the vehicle enters the stationary state. After receiving the instruction for entering the stationary state, the motor controller 52 monitors whether the vehicle enters a hill-start assist mode according to a motor status, and feeds back an instruction for entering the hill-start assist mode to the vehicle controller 51 after monitoring that the vehicle enters the hill-start assist mode. After the vehicle controller 51 receives the instruction for entering the hill-start assist mode, the vehicle controller 51 and/or the motor controller 52 control the motor by the above motor control method. The gear module 53 is configured to acquire gear information and send the gear information to the vehicle controller 51. The pedal module 54 is configured to acquire pedal information and send the pedal information to the vehicle controller 51. The battery management module 55 is configured to acquire battery power information and send the battery power information to the vehicle controller 51. The thermal management module 56 is configured to control a water pump according to a pump control instruction for the vehicle controller 51.

According to the embodiment of the present application, to avoid reverse coasting of battery electric vehicles, fuel-powered vehicles or hybrid electric vehicles during hill starts, a function of a hill-start assist mode is added to a vehicle control strategy. The function is used for a hill start of a vehicle, providing a hill-holding torque from starting to release the brake pedal to stepping on the accelerator pedal to drive to prevent the vehicle from reverse coasting in a short time, and assist a driver in a smooth hill-start.

A conventional vehicle generally uses an ESP function to meet requirements of a hill-start assist function, but cost burdens are high. Some new energy vehicles use a simple motor control mode, but logics are too simple and easy to trigger by mistake, which leads to unintended acceleration and does not meet safety requirements. This problem is considered from a system perspective for the motor control method provided in the embodiment, compared with a traditional way. A stationary condition for the vehicle is defined by the vehicle controller, and a coasting condition for the vehicle is defined by the motor. A regulation process is based on speeds, torques are regulated mainly based on PI regulation, and regulation in groups is adopted for smoother torque control. All of which are controlled by software to save costs and meet a hill-start assist function. When the vehicle slides backward on a hill, the vehicle is held on the hill by torque control to meet start needs of a driver without unintended vehicle impact back and forth to keep the stability of the vehicle.

According to the embodiment of the present application, the method includes: acquiring a motor speed and a motor torque of a vehicle when the vehicle is monitored to enter a hill-start assist mode; determining a preload torque value corresponding to the motor speed according to the motor speed; determining a proportional-integral (PI) parameter value corresponding to the motor torque value according to the motor torque value, and calculating a torque adjustment amount according to the PI parameter value corresponding to the motor torque value, the motor speed and a PI algorithm; and summing the preload torque value and the torque adjustment amount, and controlling a motor of the vehicle by using a summed result as a torque control amount to keep the vehicle in a stationary state. A torque control amount is obtained by adding a preload torque value determined according to a motor speed and a torque adjustment amount determined according to a motor torque value, and two factors of the motor speed and the motor torque value can be considered in a motor control process, so that the torque control amount can better meet the requirements of the vehicle, thereby improving the stability of the vehicle.

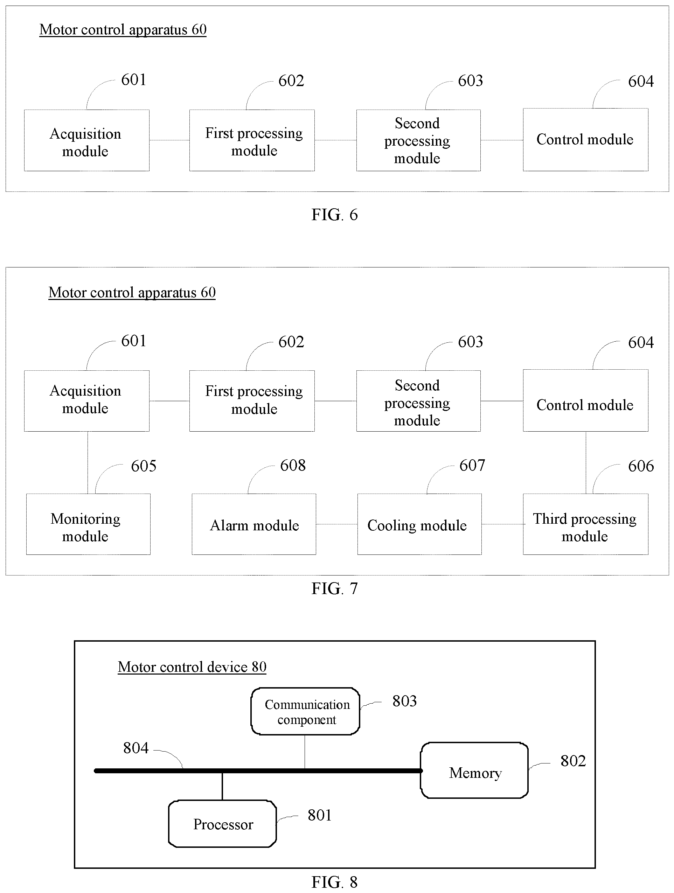

FIG. 6 is a schematic structural diagram of a motor control apparatus according to an embodiment of the present application. As shown in FIG. 6, the motor control apparatus 60 includes an acquisition module 601, a first processing module 602, a second processing module 603 and a control module 604.

The acquisition module 601 is configured to acquire a motor speed and a motor torque of a vehicle when it is monitored that the vehicle enters a hill-start assist mode.

The first processing module 602 is configured to determine a preload torque value corresponding to the motor speed according to the motor speed.

The second processing module 603 is configured to determine a proportional-integral (PI) parameter value corresponding to the motor torque value according to the motor torque value, and calculate a torque regulation amount according to the PI parameter value corresponding to the motor torque value, the motor speed, and a PI algorithm.

The control module 604 is configured to sum the preload torque value and the torque regulation amount, and control a motor of the vehicle by using a summed result as a torque control amount to keep the vehicle in a stationary state.

According to the embodiment of the present application, the motor control apparatus includes: an acquisition module, configured to acquire a motor speed and a motor torque of a vehicle when the vehicle is monitored to enter a hill-start assist mode; a first processing module, configured to determine a preload torque value corresponding to the motor speed according to the motor speed; a second processing module, configured to determine a proportional-integral (PI) parameter value corresponding to the motor torque value according to the motor torque value, and calculate a torque regulation amount according to the PI parameter value corresponding to the motor torque value, the motor speed and a PI algorithm; and a control module, configured to sum the preload torque value and the torque regulation amount, and control a motor of the vehicle by using a summed result as a torque control amount to keep the vehicle in a stationary state. A torque control amount is obtained by adding a preload torque value determined according to a motor speed and a torque regulation amount determined according to a motor torque value, and two factors of the motor speed and the motor torque value can be considered in a motor control process, so that the torque control amount can better meet the requirements of the vehicle, thereby improving the stability of the vehicle.

FIG. 7 is a schematic structural diagram of a motor control apparatus according to another embodiment of the present application. As shown in FIG. 7, the motor control apparatus 60 provided in the embodiment may further include: a monitoring module 605, a third processing module 606, a cooling module 607 and an alarm module 608, on the basis of the motor control apparatus provided in the embodiment shown in FIG. 6.

Optionally, the monitoring module 605 is configured to:
acquire operating status information of the vehicle;
determine whether the vehicle enters the stationary state according to the operating status information of the vehicle and a preset condition for entering the stationary state;
acquire motor status information of the vehicle if the vehicle enters the stationary state; and
determine that the vehicle enters the hill-start assist mode when it is determined that the motor status information of the vehicle meets a preset condition for entering the hill-start assist mode.

Optionally, the monitoring module 605 is further configured to:
monitor whether an exit event of the hill-start assist mode is triggered after the determining that the vehicle enters the hill-start assist mode;
exit the hill-start assist mode if the exit event of the hill-start assist mode is triggered;
monitor whether an exit event of the stationary state is triggered after the vehicle enters the stationary state; and
exit the stationary state if the exit event of the stationary state is triggered.

Optionally, the first processing module 602 is configured to:
search the preload torque value corresponding to the motor speed in a preset data sheet when it is determined that the acquired motor speed is a negative value and an absolute value of the motor speed is increasing;
determine that the absolute value of the motor speed reaches a maximum value when it is determined that the acquired motor speed is a negative value and the absolute value of the motor speed is less than an absolute value of a motor speed acquired at a previous moment; and
regard a preload torque value corresponding to the maximum value as the preload torque value of the motor speed after the absolute value of the motor speed reaches the maximum value.

Optionally, the second processing module 603 is configured to:
determine a torque range to which the motor torque value belongs according to the motor torque value and a preset torque range, where each torque range corresponds to a PI parameter value; and
search a PI parameter value corresponding to the torque range to which the motor torque value belongs as the PI parameter value corresponding to the motor torque value.

Optionally, the third processing module 606 is configured to:
monitor whether the motor speed of the vehicle rises from a negative value to a zero value when the vehicle is in the hill-start assist mode;
if it is monitored that the motor speed of the vehicle rises from the negative value to the zero value, regarding the minimum value between the torque regulation amount and a first preset torque threshold as the torque control amount when the motor speed rises to the zero value; and
performing the following step until the reduction difference from the acquired motor torque relative to the torque when the motor speed is the zero value is greater than a preset reduction threshold: after the motor speed rises beyond the zero value, regarding the maximum value between the torque regulation amount and a second preset torque threshold as the torque control amount.

Optionally, the cooling module 607 is configured to:
switch a state of a water pump to an operating state after the vehicle enters the hill-start assist mode to cool the motor.

Optionally, the alarm module 608 is configured to:
monitor whether a motor temperature exceeds a preset temperature threshold after the vehicle enters the hill-start assist mode, if the motor temperature exceeds the preset temperature threshold, stop up-regulation for the motor torque and give an alarm prompt.

The motor control apparatus provided in the embodiment of the present application can be used to perform the method embodiments described above with similar implementation principles and technical effects, which is not repeated here in the embodiment.

FIG. 8 is a schematic diagram of a hardware structure of a motor control device according to an embodiment of the present application. As shown in FIG. 8, the motor control device 80 provided in the embodiment includes at least one processor 801 and a memory 802. The motor control device 80 further includes a communication component 803. The processor 801, the memory 802 and the communication component 803 are connected via a bus 804.

In a specific implementation process, at least one processor 801 executes a computer-executable instruction stored in the memory 802, causing the at least one processor 801 to perform the motor control method as described above.

For a specific implementation process of the processor 801, refer to the method embodiments described above with similar implementation principles and technical effects, which is not repeated here in the embodiment.

In the embodiment shown in FIG. 8, it should be understood that the processor may be a central processing unit (CPU), or another general-purpose processor, digital signal processor (DSP) or application specific integrated circuit (ASIC). The general-purpose processor may be a microprocessor, or the processor may be any conventional processor. Steps combined with the method disclosed in the present application may be directly embodied as being performed by a hardware processor or by a combination of hardware and software modules in the processor.

The memory may include a high-speed RAM memory, and may further include a non-volatile memory (NVM), such as at least one magnetic disc memory.

The bus may be an ISA (Industry Standard Architecture) bus, a PCI (Peripheral Component) bus or an EISA (Extended Industry Standard Architecture) bus. Buses can be divided into address buses, data buses, control buses, etc. To facilitate representation, the bus in the accompanying drawings of the present application is not limited to only one bus or a type of bus.

The described apparatus embodiment is merely an example, the units described as separate components may or may not be physically separated, and the components displayed as units may or may not be physical units, that is, may be located in one place, or may be distributed to a plurality of network units. Some or all of the modules may be selected according to actual needs to achieve the objectives of the solutions of the embodiment. It can be understood and implemented by those of ordinary skill in the art without creative efforts.

Component embodiments in the present application may be implemented in hardware, or a software module running on one or more processors, or any combination thereof. It should be understood by those skilled in the art that a microprocessor or digital signal processor (DSP) may be used in practice to achieve some or all of functions of some or all of components in the motor control device according to an embodiment of the present application. The present application may also be implemented as a device or apparatus program (e.g., a computer program and a computer program product) for performing some or all of the methods described herein. Such a program for implementing the present application may be stored in a computer-readable medium, or may take the form of one or more signals. Such a signal can be downloaded from an Internet site, or provided on a carrier signal, or in any other form.

The present application further provides a computer-readable storage medium having a computer-executable instruction stored therein, the computer-executable instruction, when executed by a processor, implements the motor control method as described above.

The computer-readable storage medium may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk. The readable storage medium may be any available medium that can be accessed by a general-purpose or special-purpose computer.

An exemplary readable storage medium is coupled to a processor, so that the processor can read information from the readable storage medium and write the information into the readable storage medium. Certainly, the readable storage medium can also be an integral part of the processor. The processor and the readable storage medium can be located in application specific integrated circuits (ASICs). Certainly, the processor and the readable storage medium can also be present in a device as discrete components.

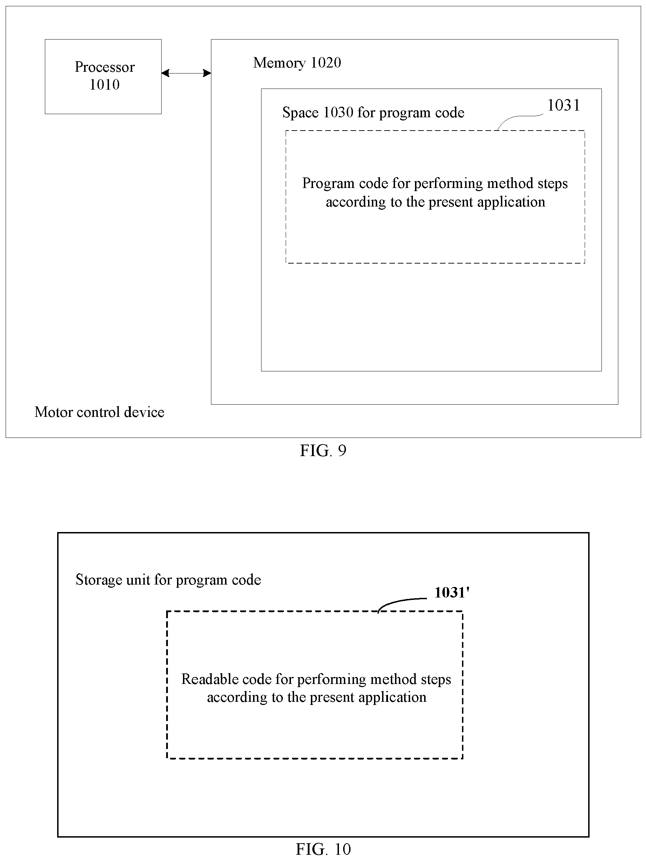

For example, FIG. 9 shows a motor control device capable of implementing the method according to the present application. The motor control device conventionally includes a processor 1010 and a computer program product or computer-readable medium in the form of a memory 1020. The memory 1020 may be an electronic memory such as flash memory, EEPROM (electrically erasable programmable read-only memory), EPROM, hard disk or ROM. The memory 1020 has a storage space 1030 for program codes 1031 for executing any one of the method steps in the above method. For example, the storage space 1030 for program codes may include the program codes 1031 for implementing various steps in the above method respectively. These program codes may be read from or written into one or more computer program products. These computer program products include program code carriers such as hard disk, compact disk (CD), memory card or floppy disk. Such a computer program product is typically a portable or fixed storage unit as described with reference to FIG. 10. The storage unit may have a storage segment or storage space arranged in a manner similar to the memory 1020 of the motor control device shown in FIG. 9. The program codes may, for example, be compressed in an appropriate form. The storage unit typically includes computer-readable codes 1031', i.e., codes that can be read by a processor such as 1010, these codes, when run by the motor control device, cause the motor control device to perform various steps in the method described above.

It can be understood by those of ordinary skill in the art that all or part of steps in the above method embodiments may be implemented by hardware associated with a program instruction. The program can be stored in a computer-readable storage medium. The program, when executed, performs steps including the above-mentioned method embodiments. The storage medium includes various media capable of storing program codes, such as ROM, RAM, magnetic disk or optical disk.

As used herein, reference to "one embodiment", "an embodiment" or "one or more embodiments" means that a particular feature, structure, or characteristic described in connection with the embodiment is included in at least one embodiment of the present application. Further, it should be noted that instances of the phrase "in one embodiment" herein do not necessarily refer to the same embodiment.

Numerous specific details are set forth in the specification provided herein. However, it can be understood that embodiments of the present application may be practiced without these specific details. In some instances, well-known methods, structures and techniques have not been shown in detail in order not to obscure the understanding of the specification.

In the claims, any reference signs placed between parentheses shall not be construed as limiting to the claim. The word "comprising" does not exclude the presence of elements or steps other than those listed in a claim. The word "a" or "an" preceding an element does not exclude the presence of a plurality of such elements. The present application can be implemented by means of hardware including several different elements and by means of a suitably programmed computer. In a unit claim enumerating several means, several of these means may be embodied by the same item of hardware. The use of the words "first", "second" and "third" does not indicate any sequence. These words can be interpreted as names.

Finally, it should be noted that the foregoing embodiments are merely intended for describing the technical solutions of the present application rather than limiting the present application. Although the present application is described in detail with reference to the foregoing embodiments, those of ordinary skill in the art should understand that they may still make modifications to the technical solutions described in the foregoing embodiments or make equivalent replacements to some or all technical features thereof, without departing from the scope of the technical solutions of the embodiments of the present application.

## Claims

1. A method for motor control, wherein the method comprises:
acquiring a motor speed and a motor torque value of a vehicle when it is monitored that the vehicle enters a hill-start assist mode;
determining a preload torque value corresponding to the motor speed according to the motor speed;
determining a proportional-integral (PI) parameter value corresponding to the motor torque value according to the motor torque value, and calculating a torque regulation amount according to the PI parameter value corresponding to the motor torque value, the motor speed, and a PI algorithm; and
summing the preload torque value and the torque regulation amount, and controlling a motor of the vehicle by using a summed result as a torque control amount, to keep the vehicle in a stationary state.

2. The method for motor control according to claim 1, wherein before it is monitored that the vehicle enters the hill-start assist mode, the method further comprises:
acquiring operating status information of the vehicle;
determining whether the vehicle enters the stationary state according to the operating status information of the vehicle and a preset condition for entering the stationary state;
acquiring motor status information of the vehicle if the vehicle enters the stationary state; and
determining that the vehicle enters the hill-start assist mode when it is determined that the motor status information of the vehicle meets a preset condition for entering the hill-start assist mode.

3. The method for motor control according to claim 2, wherein after the step of determining that the vehicle enters the hill-start assist mode, the method further comprises:
monitoring whether an exit event of the hill-start assist mode is triggered; and
exiting the hill-start assist mode if the exit event of the hill-start assist mode is triggered;
wherein after the vehicle enters the stationary state, the method further comprises:
monitoring whether an exit event of the stationary state is triggered; and
exiting the stationary state if the exit event of the stationary state is triggered.

4. The method for motor control according to claim 1, wherein the step of determining a preload torque value corresponding to the motor speed according to the motor speed comprises:
searching the preload torque value corresponding to the motor speed in a preset data sheet when it is determined that the acquired motor speed is a negative value and an absolute value of the motor speed is increasing;
determining that the absolute value of the motor speed reaches a maximum value when it is determined that the acquired motor speed is a negative value and the absolute value of the motor speed is less than an absolute value of a motor speed acquired at a previous moment; and
regarding a preload torque value corresponding to the maximum value as the preload torque value of the motor speed after the absolute value of the motor speed reaches the maximum value.

5. The method for motor control according to claim 1, wherein the step of determining a proportional-integral (PI) parameter value corresponding to the motor torque value according to the motor torque value comprises:
determining a torque range to which the motor torque value belongs according to the motor torque value and a preset torque range, wherein each torque range corresponds to a PI parameter value; and
searching a PI parameter value corresponding to the torque range to which the motor torque value belongs as the PI parameter value corresponding to the motor torque value.

6. The method for motor control according to claim 1, wherein the method further comprises:
monitoring whether the motor speed of the vehicle rises from a negative value to a zero value when the vehicle is in the hill-start assist mode;
if it is monitored that the motor speed of the vehicle rises from the negative value to the zero value, regarding the minimum value between the torque regulation amount and a first preset torque threshold as the torque control amount when the motor speed rises to the zero value; and
performing the following step until the reduction difference from the acquired motor torque value relative to the motor torque value when the motor speed is the zero value is greater than a preset reduction threshold: after the motor speed rises beyond the zero value, regarding the maximum value between the torque regulation amount and a second preset torque threshold as the torque control amount.

7. The method for motor control according to any one of claims 1 to 6, wherein the method further comprises:
monitoring whether a motor temperature exceeds a preset temperature threshold after the vehicle enters the hill-start assist mode, if the motor temperature exceeds the preset temperature threshold, stopping up-regulation for the motor torque and giving an alarm prompt.

8. An apparatus for motor control, wherein the apparatus comprises:
an acquisition module, configured to acquire a motor speed and a motor torque value of a vehicle when it is monitored that the vehicle enters a hill-start assist mode;
a first processing module, configured to determine a preload torque value corresponding to the motor speed according to the motor speed;
a second processing module, configured to determine a proportional-integral (PI) parameter value corresponding to the motor torque value according to the motor torque value, and calculate a torque regulation amount according to the PI parameter value corresponding to the motor torque value, the motor speed, and a PI algorithm; and
a control module, configured to sum the preload torque value and the torque regulation amount, and control a motor of the vehicle by using a summed result as a torque control amount to keep the vehicle in a stationary state.

9. A device for motor control, comprising at least one processor and a memory; wherein,
the memory stores a computer-executable instruction; and
the at least one processor executes the computer-executable instruction stored in the memory, so that the at least one processor executes the method for motor control according to any one of claims 1 to 7.

10. A computer-readable storage medium, having a computer-executable instruction stored therein, wherein the computer-executable instruction, when executed by a processor, implements the method for motor control according to any one of claims 1 to 7.

11. A computer program, comprising a computer readable code, wherein the computer readable code, when running on a device for motor control, causes the device for motor control to implement the method for motor control according to any one of claims 1 to 7.
